(19) Europäisches Patentamt / European Patent Office / Office européen des brevets

(11) **EP 4 734 337 A1**

(12) **DEMANDE DE BREVET EUROPEEN**

(43) Date de publication:
**29.04.2026 Bulletin 2026/18**

(21) Numéro de dépôt: **25208417.3**

(22) Date de dépôt: **13.10.2025**

(51) Classification Internationale des Brevets (IPC):
**H02K 7/08** *(2006.01)* **H01R 39/64** *(2006.01)*
**F16C 41/00** *(2006.01)* **F16C 19/06** *(2006.01)*

(52) Classification Coopérative des Brevets (CPC):
**H02K 7/08; F16C 19/06; F16C 41/002; H01R 39/64; H01R 39/643;** F16C 2240/46; F16C 2380/26; H02K 2213/03

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **26.10.2024 FR 2411728**

(71) Demandeur: **NTN Europe**
**74000 Annecy (FR)**

(72) Inventeurs:
• **BAUDU, Alexandre**
**74010 Annecy Cedex (FR)**
• **POURROY-SOLARI, Vincent**
**74230 THONES (FR)**
• **VANDAMME, Etienne**
**74540 ALLEVES (FR)**

(74) Mandataire: **Alatis**
**3, rue Paul Escudier**
**75009 Paris (FR)**

(54) **DISPOSITIF DE PASSAGE DE COURANT ENTRE UN SOUS-ENSEMBLE FIXE ET UN SOUS-ENSEMBLE TOURNANT**

(57) Un dispositif de passage de courant (70) deux sous-ensembles (2, 4), au moins l'un des deux sous-ensembles étant apte à tourner autour d'un axe de révolution par rapport à l'autre des deux sous-ensembles, le dispositif comprenant une piste de contact intérieure (26) annulaire ayant une symétrie de révolution autour d'un axe de référence (100), tournée radialement vers l'extérieur et s'étendant axialement entre une première extrémité intérieure (32) et une deuxième extrémité intérieure (34) ; une piste de contact extérieure (56) annulaire ayant une symétrie de révolution autour de l'axe de référence (100), tournée radialement vers l'intérieur en regard de la piste de contact intérieur ; au moins une bille de contact (35), présentant un diamètre de bille $D_{BC}$, positionnée entre les pistes de contact intérieure et extérieure, et aptes, dans une position opérationnelle, à rouler sur les pistes de contact intérieure et extérieure tronconiques.

Fig.2

EP 4 734 337 A1

## Description

## DOMAINE TECHNIQUE DE L'INVENTION

L'invention se rapporte à un dispositif de passage de courant électrique entre un sous-ensemble tournant, supportant par exemple un rotor de machine électrique, et un sous-ensemble fixe, fixé par exemple sur un stator de machine électrique, et notamment, bien que de façon non exclusive, lorsque de tels dispositifs sont montés ou destinés à être sur des véhicules, par exemple des automobiles, des véhicules ferroviaires ou des aéronefs, et ceci quelle que soit la nature du courant électrique, continu ou alternatif, que le courant soit par exemple un courant de fuite, de commande, de transmission d'information, ou d'alimentation électrique. Elle se rapporte également à un palier lisse ou à roulement intégrant un tel dispositif de passage de courant.

## ÉTAT DE LA TECHNIQUE ANTÉRIEURE

Pour assurer la conduction électrique entre un sous-ensemble tournant et un sous-ensemble fixe, il serait tentant d'utiliser les paliers à roulement, dont la fonction principale est d'assurer le guidage en rotation relative entre les sous-ensembles tournant et fixe, dans la mesure où les éléments constitutifs de tels paliers, chemins de roulement et corps roulants, sont en matériaux conducteurs. Il s'avère toutefois que la lubrification nécessaire au fonctionnement d'un palier ne permet pas d'assurer de façon satisfaisante ce passage du courant à haute vitesse. En effet, on constate, lorsque la vitesse de rotation augmente, la formation d'un film de lubrifiant entre les corps roulants et les chemins de roulement, film dont l'épaisseur augmente avec la vitesse. Cet effet, souhaitable pour la fonction mécanique principale du palier, ne l'est pas pour la conduction électrique, car le lubrifiant se comporte comme un isolant électrique. En conséquence, une différence de potentiel entre les chemins de roulement engendre des arcs électriques qui altèrent rapidement le lubrifiant et la surface métallique des chemins de roulements et des corps roulants et provoquent un échauffement et des écaillages des chemins de roulement ou des corps roulants.

Pour pallier ce problème, il a été proposé dans le document JP 2022118903 d'adjoindre à un palier à roulement un dispositif de passage de courant comprenant des billes de contact roulant sur deux pistes de contact rapportées, l'une sur la bague intérieure et l'autre sur la bague extérieure. Les billes de contact sont réalisées en un matériau conducteur souple et poreux, qui a la double propriété d'absorber le lubrifiant au contact entre les billes et les pistes de contact et de s'écraser légèrement pour accroître la surface de contact avec les pistes de contact lorsque la vitesse augmente. On est ainsi assuré que le courant électrique traversant les bagues du palier à roulement passera de façon privilégiée par le dispositif de passage de courant dont l'impédance est sensiblement inférieure à celle du palier à roulement. Cette solution n'est toutefois pas performante en termes de frottements. De plus, elle est sensible à la charge axiale du roulement et au micro-déplacement axiaux que celle-ci peut engendrer, et génère également un niveau de bruit plus important.

## EXPOSÉ DE L'INVENTION

L'invention vise à remédier à au moins certains des inconvénients de l'état de la technique cités ci-dessus et à proposer un dispositif de passage de courant qui réduit les frottements et/ou dont l'impédance n'augmente pas de façon importante avec la vitesse.

Pour ce faire est proposé, selon un premier aspect de l'invention, un dispositif de passage de courant entre deux sous-ensembles, au moins l'un des deux sous-ensembles étant apte à tourner autour d'un axe de révolution par rapport à l'autre des deux sous-ensembles, le dispositif comprenant :

- une piste de contact intérieure annulaire et conductrice, destinée à être solidaire d'un premier des deux sous-ensembles, la piste de contact intérieure ayant une symétrie de révolution autour d'un axe de référence du dispositif de passage de courant destiné à être confondu avec l'axe de révolution, la piste de contact intérieure étant tournée radialement vers l'extérieur et s'étendant axialement au moins d'une première extrémité intérieure à une deuxième extrémité intérieure, plus éloignée de l'axe de référence que la première extrémité intérieure ;

- une piste de contact extérieure annulaire et conductrice, destinée à être solidaire d'un deuxième des deux sous-ensembles, la piste de contact extérieure ayant une symétrie de révolution autour de l'axe de référence, la piste de contact extérieure étant tournée radialement vers l'intérieur et en regard de la piste de contact intérieur ;

- au moins une bille de contact conductrice, présentant un diamètre de bille $D_{BC}$, positionnée entre les pistes de contact intérieure et extérieure, et aptes, dans une position opérationnelle, à rouler sur les pistes de contact intérieure et extérieure ;

Selon l'invention, le dispositif de passage de courant est tel que dans un plan de coupe contenant l'axe de référence, tout segment perpendiculaire à l'axe de référence, et ayant une première extrémité qui appartient à la piste de contact intérieure et une deuxième extrémité qui appartient à la piste de contact extérieure, présente :

- un centre qui, dans un repère orthonormé ayant un axe d'abscisse confondu avec l'axe de référence et un axe des ordonnées qui passe par la première extrémité intérieure de la piste de contact intérieure, a une abscisse égale à x et une ordonnée égale à y, définissant une fonction $x \to y = f(x)$ qui, lorsque x varie entre 0 et une abscisse positive de la deuxième extrémité, est strictement croissante de manière continue ;

- une longueur $l$ définissant une fonction $x \to l = g(x)$ qui, lorsque l'abscisse x du centre du segment varie entre 0 et la deuxième extrémité, est strictement décroissante de manière continue, présentant une valeur maximale supérieure au diamètre des billes $D_{BC}$, et une valeur minimale inférieure au diamètre des billes $D_{BC}$.

Les pistes de contact intérieure et extérieure permettent donc à la bille de contact un débattement à la fois axial et radial, la force centrifuge poussant la bille de contact à s'éloigner de l'axe de référence et donc, en roulant sur la piste de contact extérieure, à se déplacer axialement. Ainsi, lorsque la vitesse de rotation est suffisante, la bille de contact est en contact avec les deux pistes de contact simultanément, et ceci avec une pression de contact qui augmente avec la vitesse et contrebalance la tendance d'augmentation, avec la vitesse, de l'épaisseur du film d'huile lubrifiante entre la ou les billes de contact et les pistes de contact. Par ailleurs, la géométrie choisie permet une centrifugation de l'huile lubrifiante présente dans le dispositif, et permet donc d'éviter une accumulation de l'huile au niveau des pistes de contact, ce qui contribue également à une meilleure maîtrise de l'épaisseur du film d'huile lorsque la vitesse augmente. Enfin, cette géométrie des pistes de contact permet aux billes de contact de se repositionner en cas de micro-déplacements axiaux et radiaux relatifs entre le sous-ensemble fixe et le sous-ensemble mobile.

Selon un mode de réalisation, la piste de contact intérieure est tronconique. De préférence, la piste de contact intérieure présente, dans tout plan de coupe comprenant l'axe de référence, une génératrice formant, avec l'axe de référence, un angle A1 supérieur à 2°, de préférence supérieur à 14°, et inférieur à 47°, de préférence inférieure à 42°. Des angles plus élevés permettent une fabrication avec des tolérances également plus élevées.

Selon un mode de réalisation, la piste de contact extérieure est tronconique . De préférence, la piste de contact extérieure présente, dans tout plan de coupe comprenant l'axe de référence, une génératrice formant, avec l'axe de référence, un angle A2 supérieur à 1.5°, de préférence supérieur à 12°, et inférieur à 45°, de préférence inférieure à 40°.

Suivant un mode de réalisation, la piste de contact extérieure présente, dans tout plan de coupe comprenant l'axe de référence, une génératrice formant, avec une génératrice de la piste de contact intérieure un angle supérieur à 0.5°, de préférence supérieur à 1°, et inférieur à 30°, de préférence inférieure à 15°.

De telles pistes présentent un cercle osculateur de rayon infini, ce qui diminue l'ellipse de contact entre la bille de contact et la piste de contact ainsi que l'adhésion par viscosité d'un lubrifiant à la piste de contact. La bille de contact fend alors plus facilement le film de lubrifiant présent sur la piste de contact, ce qui diminue l'impédance du dispositif de passage du courant, prolongeant la durée de vie des pistes de contact par la réduction, et de préférence la suppression, d'arcs électriques. En outre, la bille de contact peut entrer en contact avec les deux pistes de contact puisque l'angle A2 est strictement inférieur à l'angle A1, les deux pistes de contact créant, dans un plan comprenant l'axe de référence, un tronc de cône. Enfin, chacune de ces dispositions favorise une évacuation de l'huile par centrifugation.

Selon un mode de réalisation, le dispositif de passage de courant comprend une cage de guidage positionnée au moins partiellement entre les pistes de contact intérieure et extérieure, la cage de guidage présentant au moins une alvéole dans laquelle est logée la bille de contact, l'alvéole définissant une première butée axiale pour la bille de contact, la première butée axiale étant située entre les pistes de contact intérieure et extérieure et axialement plus proche de la première extrémité intérieure de la piste de contact intérieure que de la deuxième extrémité intérieure de la piste de contact intérieure, la première butée axiale étant tournée axialement vers la deuxième extrémité intérieure de la piste de contact intérieure, la bille de contact établissant un point de contact avec la piste de contact intérieure à l'abscisse 0 lorsqu'elle est en appui contre la butée axiale, l'alvéole comportant deux facettes de guidage opposées ce faisant face dans une direction orthoradiale, les deux facettes de guidage s'étendant axialement depuis la première butée axiale en direction de la deuxième extrémité intérieure, de façon à permettre un déplacement de la bille de contact telle que l'abscisse du point de contact entre la bille de contact et la piste de contact intérieure varie entre 0 et l'abscisse de la deuxième extrémité. De préférence, les deux facettes de guidage sont situées à une distance l'une de l'autre supérieure au diamètre des billes $D_{BC}$, et/ou les deux facettes de guidage sont planes ou concaves.

La cage de guidage permet donc de maintenir et guider la ou les billes de contact, quelle que soit la phase fonctionnement du dispositif de passage de courant, c'est-à-dire en rotation ou à l'arrêt, entre les deux pistes de contact. De préférence, le dispositif de passage de courant comprend trois billes de contact logées dans trois alvéoles de la cage de guidage, disposées de préférence à 120° les unes des autres, de sorte à être équilibrées en rotation et ne pas générer de vibrations excessives.

Selon un mode de réalisation de l'invention, la cage de guidage comporte au moins un dispositif de débrayage centrifuge apte à solidariser la cage de guidage à une piste de contact tournante parmi la piste de contact intérieure et la piste de contact extérieure en deçà d'un seuil de vitesse angulaire de débrayage déterminé de la piste de contact intérieure ou de la piste de contact extérieure et à libérer la cage de guidage au-delà du seuil de vitesse angulaire de débrayage. Le système de débrayage permet de différentier le comportement en deçà et au-delà du seuil de vitesse angulaire de débrayage. Pour ce faire, le dispositif de débrayage centrifuge comporte par exemple une portion mobile reliée à un corps annulaire de la cage de guidage par au moins un bras flexible, ladite portion mobile comprenant un patin mobile destiné à venir en contact avec l'un quelconque des deux sous-ensembles. Le ou les bras flexibles ont vocation à permettre un mouvement de bascule de la portion mobile afin de maintenir le patin mobile au contact de la piste de contact tournante dans une position d'accouplement en deçà d'un seuil de vitesse angulaire de débrayage, et de permettre un décollement du patin par flexion du bras flexible jusqu'à une position désaccouplée, et la libération de la cage, au-delà du seuil de vitesse angulaire de débrayage, sous l'effet de la force centrifuge. En pratique, le débattement entre position d'accouplement et position désaccouplée est supérieur à 0,05 mm, de préférence supérieur à 0,10 mm, par exemple supérieur à 0,50 mm. La butée peut avoir une fonction supplémentaire de rigidification de la cage de guidage.

À faible vitesse, la ou les billes ne peuvent rouler sur la piste de contact tournante par rapport à laquelle la cage de guidage reste fixe. Aux prises avec une force centrifuge faible, d'éventuels effets de la pesanteur, et d'éventuels efforts de réaction au contact de la piste de contact extérieure, le positionnement des billes de contact est incertain et éventuellement fluctuant. Mais ceci n'est pas impactant dans la mesure où à faible vitesse, il est possible de faire passer le courant par un palier à roulement ou un palier lisse de guidage du sous-ensemble mobile, sans avoir à craindre une épaisseur trop élevée du film d'huile.

Lorsque la vitesse de rotation $\Omega_I$ du sous-ensemble mobile augmente, la force centrifuge sur les billes est suffisante pour les faire migrer dans une zone des alvéoles qui leur impose un contact simultané avec la piste de contact intérieure et la piste de contact extérieure, de sorte que les billes de contact glissent et roulent à la fois sur les pistes de contact. Cet effet est obtenu dès lors que la force centrifuge exercée sur les billes est supérieure à la force de pesanteur sur les billes, ce que l'on peut traduire en première approximation par l'inégalité :

$$m\Omega_I{}^2 \frac{D_B + D_{CI}}{2} > mg$$

où m désigne la masse de la bille, $\Omega_I$ désigne la vitesse de rotation du sous-ensemble tournant, $D_B$ désigne le diamètre de bille, $D_{CI}$ désigne le diamètre de la piste de contact intérieure et g désigne l'accélération de la pesanteur. On peut ainsi définir une vitesse angulaire de

changement de comportement $\Omega_{I0}$ telle que :

$$\Omega_{I0} = \sqrt{\frac{2g}{D_B + D_{CI}}}$$

Dès que la cage de guidage atteint le seuil de vitesse angulaire de débrayage $\Omega_S$, la cage est libérée de la bague tournante et entraînée en rotation par le roulement des billes sur les pistes de contact. La cage tourne alors à une vitesse $\Omega_C$ qui est inférieure à la vitesse de rotation de la bague tournante $\Omega_I$, et, en considérant un roulement sans glissement de la bille de contact et les bagues respectivement intérieur et extérieur, définie par la relation suivante :

$$\Omega_C = \Omega_I \frac{D_{CI}}{D_{CI} + D_{CE}}$$

où $D_{CI}$ désigne le diamètre du point de contact entre la bague tournante et la bille de contact et $D_{CE}$ désigne le diamètre du point de contact entre la bague fixe et la bille de contact.

Pour garantir la mise en rotation des billes, lorsque le seuil de vitesse angulaire de débrayage $\Omega_S$ est dépassé, $\Omega_C$ doit de préférence être supérieure à la vitesse angulaire de changement de comportement $\Omega_{I0}$, ceci afin que les billes restent par centrifugation dans la zone de contact avec les deux pistes de contact une fois la vitesse angulaire de débrayage $\Omega_S$ atteinte. On étalonne donc le dispositif de débrayage de préférence de telle sorte que :

$$\Omega_C > \Omega_{I0}$$

soit :

$$\Omega_I > \sqrt{\frac{2g}{(D_{CI} + D_{CE})} \times \frac{(D_{CI} + D_{CE})}{D_{CI}}}$$

En dessous du seuil de vitesse angulaire de débrayage $\Omega_S$, $\Omega_c = \Omega_1$, ce qui conduit à définir de préférence le seuil de vitesse angulaire de débrayage $\Omega_S$ de la cage tel que :

$$\Omega_S > \sqrt{\frac{2g}{(D_{CI} + D_{CE})} \times \frac{(D_{CI} + D_{CE})}{D_{CI}}}$$

Suivant un mode de réalisation du dispositif de débrayage le dispositif de débrayage centrifuge comporte une butée tournée radialement vers l'axe de référence en regard de la portion mobile pour limiter un déplacement radial du patin mobile vers l'extérieur. Les paramètres que l'on ajustera pour obtenir l'inégalité ci-dessus seront alors de façon privilégiée la raideur en flexion du bras flexible et la masse de la portion mobile.

Par ailleurs, on peut prévoir que la cage de guidage comporte une ou plusieurs languettes de retenue en saillie radialement vers la piste de guidage tournante ou le sous-ensemble associé, pour assurer un maintien en position de la cage par rapport à la piste de guidage tournante. Ces languettes de retenues, de préférence disposées de façon équirépartie à la périphérie ou à l'intérieur de la cage de guidage, peuvent par exemple être destinées à venir s'insérer dans une gorge annulaire formée sur le sous-ensemble associé à la piste de guidage tournante.

Suivant un mode de réalisation, la cage de guidage est réalisée d'une pièce en matière plastique, ce qui permet de minimiser le nombre de pièces et les coûts d'assemblage.

Selon un autre aspect de l'invention, celle-ci a trait à un palier à roulement comportant une bague intérieure comprenant au moins un chemin de roulement intérieur ; une bague extérieure comprenant au moins un chemin de roulement extérieur ; au moins deux corps roulants présentant un diamètre $D_{BR}$, positionnés de façon à rouler simultanément sur les chemins de roulement intérieur et extérieur ; le palier à roulement étant remarquable en ce qu'il comprend un dispositif de passage de courant tel que décrit ci-avant, la bague intérieure comprenant la piste de contact intérieure annulaire et la bague extérieure comprenant la piste de contact extérieure annulaire. Les corps roulants peuvent être des rouleaux ou des billes par exemple. Les corps roulants sont distincts des billes de contact et ont pour fonction principale d'assurer le guidage en rotation du sous-ensemble tournant par rapport au sous-ensemble fixe. Le dimensionnement des corps roulants est donc fonction, notamment, des charges axiales ou radiales auxquelles le palier à roulement est soumis. De préférence, les corps roulants et les chemins de roulement sont réalisés en matériau électriquement conducteur, ce qui permet d'assurer la conduction du courant à faible vitesse de rotation, avant que la centrifugation des billes du dispositif de passage de courant permette d'assurer la liaison électrique. De préférence, la bague intérieure est monobloc et/ou la bague extérieure est monobloc.

Suivant un mode de réalisation, dont le dispositif de passage de courant comporte une cage de guidage comme décrit précédemment, la cage de guidage présente une face de guidage orientée majoritairement suivant la direction radiale et située en regard et à distance inférieure à 0,5 mm et supérieure à 0,05 mm d'une face correspondante d'un des deux sous-ensembles, pour assurer un guidage radial de la cage par rapport audit sous-ensemble.

Selon un mode de réalisation, le chemin de roulement intérieur est situé axialement à distance de la piste de contact intérieure et le chemin de roulement extérieur est situé axialement à distance de la piste de contact extérieure. Ces dispositions permettent de diminuer le nombre de pièces nécessaires pour réaliser le palier à roulement, les coûts d'assemblage, et le cas échéant l'encombrement.

Suivant un mode de réalisation, la première extrémité intérieure de la piste de contact intérieure est axialement plus éloignée du chemin de roulement intérieur que la deuxième extrémité intérieure de la piste de contact intérieure. Cette disposition facilite les opérations d'assemblage du dispositif du passage de courant, et notamment des billes de contact.

Dans un mode de réalisation où des languettes de retenues sont prévues sur une cage de guidage du dispositif de passage de courant, une gorge annulaire peut être formée sur l'une des bagues de roulement, les languettes de retenues venant se loger dans cette gorge annulaire pour assurer un maintien axial de la cage de guidage du dispositif de passage de courant.

Le cas échéant, les corps roulants sont positionnés dans des alvéoles d'une cage de roulement. Dans l'hypothèse où le dispositif de passage de courant comporte lui-même une cage de guidage, la cage de roulement est de préférence non solidaire de la cage de guidage. Les deux cages tournent alors à des vitesses angulaires différentes, ce qui contribue au brassage de l'huile au sein du palier à roulement.

Suivant un autre aspect de l'invention, celle-ci a trait à un ensemble comportant deux sous-ensembles et un palier à roulement pour guider au moins l'un des deux sous-ensembles en rotation autour d'un axe de révolution par rapport à l'autre des deux sous-ensembles, le palier à roulement étant un palier tel que décrit précédemment, dont la bague intérieure est solidaire d'un premier des deux sous-ensembles et la bague extérieure est solidaire d'un deuxième des deux sous-ensembles.

Suivant un mode de réalisation, le premier sous-ensemble est apte à tourner par rapport au deuxième sous-ensemble autour de l'axe de révolution, le deuxième sous-ensemble étant fixe en rotation dans un repère géostationnaire.

**BRÈVE DESCRIPTION DES FIGURES**

D'autres caractéristiques et avantages de l'invention ressortiront à la lecture de la description qui suit, en référence aux figures annexées.

La figure 1 illustre, dans une vue en coupe, un palier à roulement comprenant un dispositif de passage de selon un premier mode de réalisation.

La figure 2 illustre, dans une vue en coupe, le dispositif de passage de courant seul selon le premier mode de réalisation.

La figure 3 illustre, dans une vue isométrique, un détail du roulement selon le premier mode de réalisation.

La figure 4 illustre, dans une vue isométrique, une cage du dispositif de passage de courant selon le premier mode de réalisation.

La figure 5 illustre une vue en coupe de la cage selon le premier mode de réalisation.

La figure 6 illustre un détail géométrique de la structure des pistes de contact du dispositif de contact selon le premier mode de réalisation.

La figure 7 illustre un détail des alvéoles de la cage.

La figure 8 illustre un détail d'un dispositif de débrayage de la cage selon le premier mode de réalisation.

La figure 9 illustre dans une vue en coupe, un roulement à billes comprenant le dispositif de passage de courant selon un deuxième mode de réalisation.

La figure 10 illustre dans une vue en coupe, la cage du dispositif de passage de courant selon le deuxième mode de réalisation.

La figure 11 illustre dans une vue en coupe, le palier à roulement comprenant le dispositif de passage de selon un troisième mode de réalisation.

La figure 12 illustre un détail du dispositif de débrayage de la cage selon le troisième mode de réalisation.

Pour plus de clarté, les éléments identiques ou similaires sont repérés par des signes de référence identiques sur l'ensemble des figures.

## DESCRIPTION DÉTAILLÉE DE MODES DE RÉALISATION

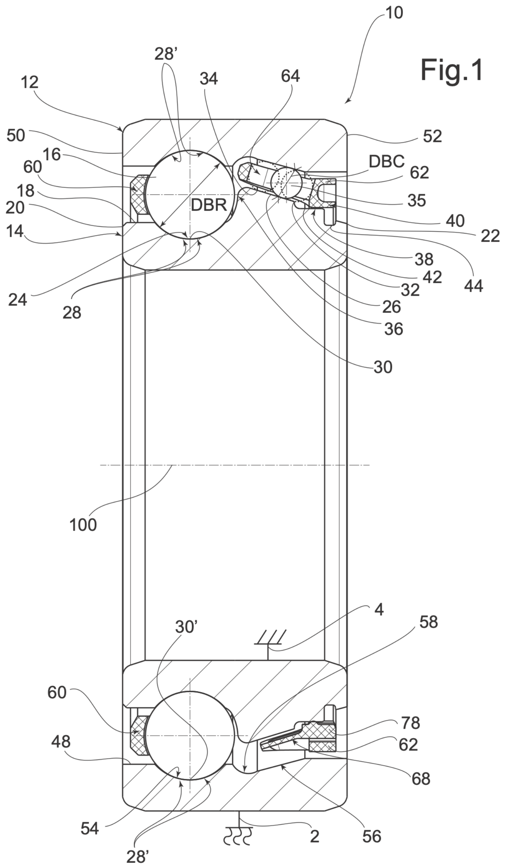

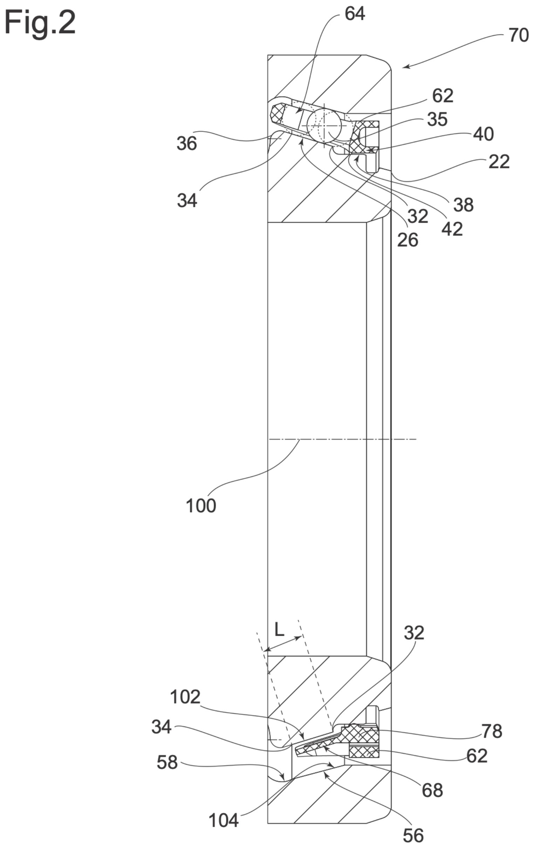

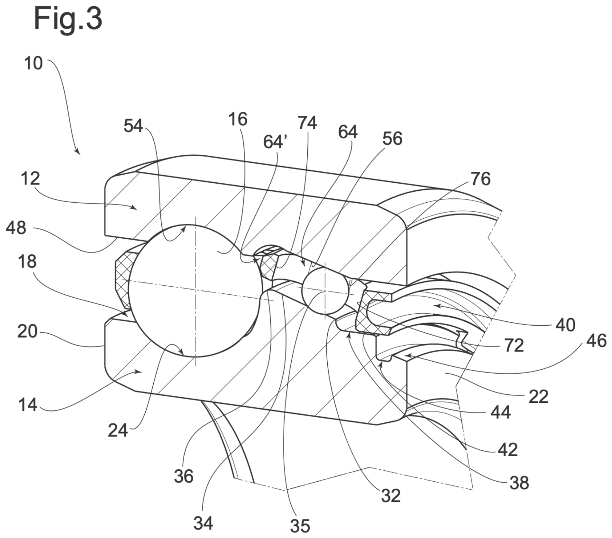

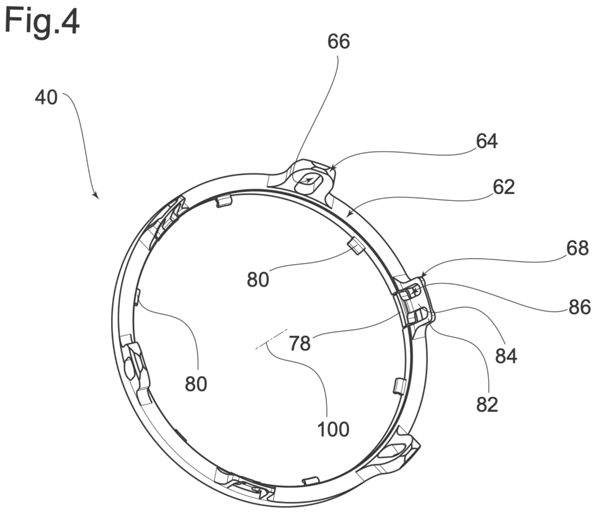

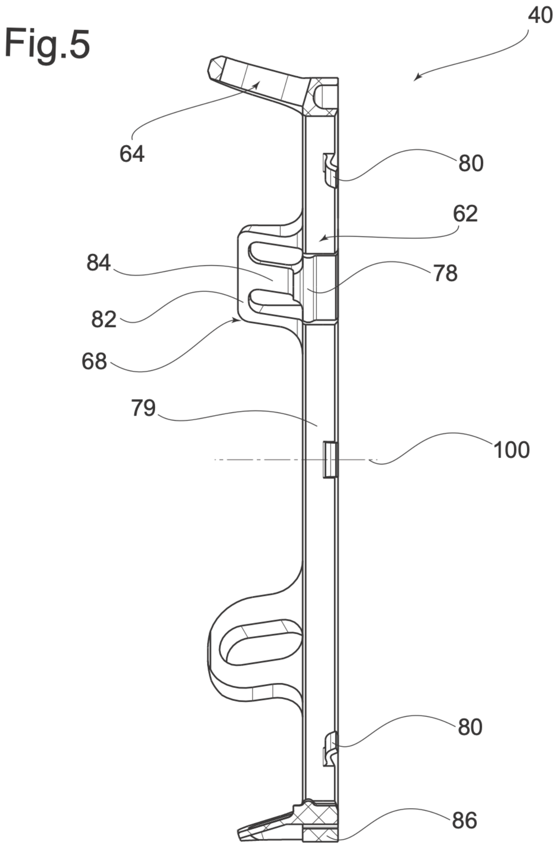

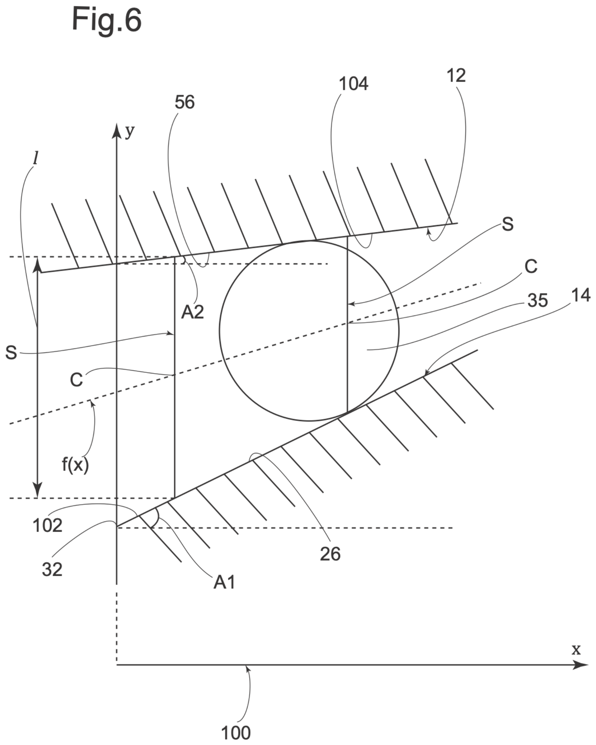

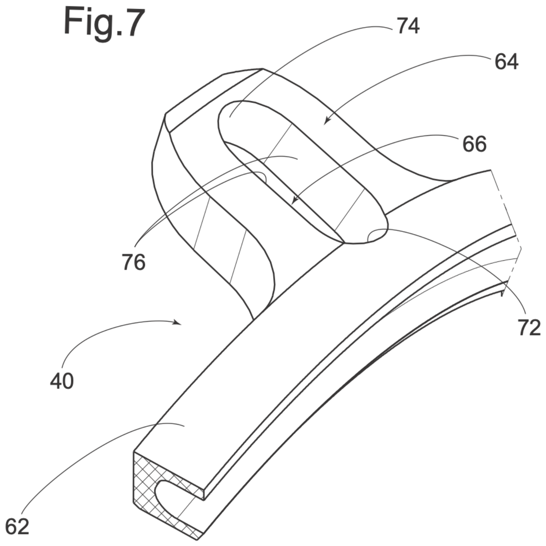

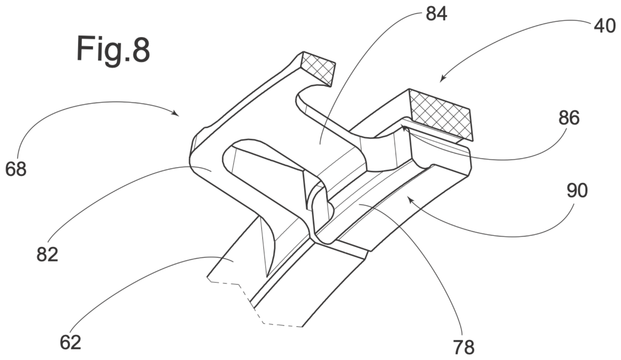

Sur les figures 1 à 10 est illustré un palier à roulement **10** entre un sous-ensemble fixe **2**, par exemple un carter d'un véhicule automobile et définissant un axe de référence **100**, et un sous-ensemble tournant **4**, par exemple un arbre, apte à tourner autour de l'axe de référence **100** à l'intérieur du sous-ensemble fixe **2**, le palier comportant une bague extérieure **12** métallique solidaire du sous-ensemble fixe **2**, une bague intérieure métallique **14** solidaire du sous-ensemble tournant **4**, et des corps roulants **16** entre la bague intérieure **14** et la bague extérieure **12**. Le palier à roulement **10** comprend en outre un dispositif de passage de courant **70** illustré seul sur la figure 2.

La bague intérieure **14** est ici une bague intérieure métallique massive monobloc comprenant une surface annulaire intérieure **18** tournée radialement à l'opposé de l'axe de référence **100** et s'étendant entre une première face d'extrémité **20** et une deuxième face d'extrémité **22**. Sur la surface annulaire intérieure **18** sont formés un chemin de roulement intérieur **24** et une piste de contact intérieure **26** coaxiaux qui sont deux surfaces de révolution autour de l'axe de référence **100**. À cet effet, la bague intérieure **14** peut subir un traitement thermique et un usinage, tous deux localisés au niveau du chemin de roulement intérieur **24** et de la piste de contact intérieure **26**. Le chemin de roulement intérieur **24** est positionné à proximité de la première face d'extrémité **20** tandis que la piste de contact intérieure **26** est positionnée à proximité de la deuxième face d'extrémité **22**. La piste de contact intérieure **26** forme un premier élément du dispositif de passage de courant **70.**

Le chemin de roulement intérieur **24** comprend deux flancs **28** situés axialement de part et d'autre d'un fond de chemin **30**, et est destiné à accueillir les corps roulants **16**, qui sont ici des billes ayant un diamètre $D_{BR}$, mais pourraient alternativement être des rouleaux des cônes ou des tonnelets. Les corps roulants **16** sont composés, de préférence constitués, de métal, et sont configurés pour guider et supporter les charges extérieures radiales et/ou axiales.

La piste de contact intérieure **26** est quant à elle une surface tronconique, de préférence rectifiée, annulaire et présente une symétrie de révolution autour de l'axe de référence **100**. La piste de contact intérieure **26** s'étend entre une première extrémité intérieure **32,** à proximité de la deuxième face d'extrémité **22** et une deuxième extrémité intérieure **34** à proximité du chemin de roulement intérieur **24**. Elle est configurée pour accueillir des corps roulants de contact, plus particulièrement des billes de contact **35**. Les billes de contact **35** sont composées, de préférence constituées, de métal, et présentent un diamètre $D_{BC}$. Elles forment un élément du dispositif de passage du courant **70**. En outre, les billes de contact **35** sont configurées pour conduire le courant électrique entre la bague extérieure **12** fixe et la bague intérieure **14** tournante, et ainsi entre le sous-ensemble fixe **2** et le sous-ensemble tournant **4**. Contrairement aux corps roulants **16,** elles n'ont pas vocation à guider en rotation le sous-ensemble tournant **14**. Elles sont ici au nombre de 3, positionnées à 120° les unes des autres, mais en variante, elles peuvent être plus ou moins nombreuses. Le diamètre $D_{BC}$ des billes de contact **35** est de préférence strictement inférieur à la longueur L de la génératrice de la piste de contact intérieure **26,** afin de permettre un déplacement comprenant une composante axiale des billes de contact **35** sur la piste de contact intérieure **26** tout en diminuant l'encombrement axial de la bague intérieure **14**. Avantageusement, le diamètre $D_{BC}$ des billes doit être le plus petit possible pour réduire l'encombrement du dispositif de passage de courant **70**.

Selon un premier mode de réalisation illustré sur les figures 1 à 8, dans un plan de coupe comprenant l'axe de référence **100** (comme illustré sur la figure 1), la piste de contact intérieure **26** présente une génératrice intérieure **102** formant, avec l'axe de référence **100,** un angle **A1** de 17°. Plus généralement, cet angle **A1** est supérieur à 2°, de préférence supérieur à 14°, et inférieur à 47°, de préférence inférieur à 42°. La génératrice intérieure **102** de la piste de contact intérieure **26** est telle qu'elle s'éloigne de l'axe de référence **100** à mesure qu'elle se rapproche du chemin de roulement intérieur **24**. Le chemin de roulement intérieur **24** et la piste de contact intérieure **26** sont séparés par une surface de séparation intérieure **36**.

Sur la surface annulaire intérieure **18** est en outre formée une portion d'accueil **38** configurée pour accueillir sur la bague intérieure **14** une cage de guidage **40** décrite dans la suite de la présente demande. La portion d'accueil **38** est positionnée entre la deuxième face d'extrémité **22** et la piste de contact intérieure **26**. Elle comprend, à mesure qu'elle se rapproche de la deuxième face d'extrémité **22**, une face d'accueil **42** cylindrique circulairement, une gorge annulaire **44** et un chanfrein **46** débouchant sur la deuxième face d'extrémité **22**.

La bague extérieure fixe **12** est ici une bague métallique massive monobloc comprenant une surface annulaire extérieure **48** tournée radialement vers l'axe de référence **100** et s'étendant entre une première extrémité extérieure **50** et une deuxième extrémité extérieure **52**. Sur la surface annulaire extérieure **48** sont formés un chemin de roulement extérieur **54** et une piste de contact extérieure **56** coaxiaux définissant l'axe de référence **100**. À cet effet, la bague extérieure **12** peut subir un traitement thermique et un usinage, tous deux localisés au niveau du chemin de roulement extérieur **54** et de la piste de contact extérieure **56**. La piste de contact extérieure **56** forme un deuxième élément du dispositif de passage de courant **70**.

Le chemin de roulement extérieur **54** comprend deux flancs **28'** situés axialement de part et d'autre d'un fond de chemin **30'**. Le chemin de roulement extérieur **54** est situé en regard du chemin de roulement **24** et est destiné à accueillir les corps roulants **16**.

La piste de contact extérieure **56** présente une surface tronconique annulaire, de préférence rectifiée, et présente une symétrie de révolution autour de l'axe de référence **100**. La piste de contact extérieure **56** est située en regard et à distance de la piste de contact intérieure **26** et est configurée pour accueillir les billes de contact **35**. Dans un plan de coupe contant l'axe de référence **100** (comme illustré sur la figure 1), la piste de contact extérieure **56** présente une génératrice extérieure **104** formant, avec l'axe de référence **100**, un angle **A2** de 15°. Plus généralement, l'angle **A2** est supérieur à 1,5°, de préférence supérieur à 12°, et inférieur à 45°, de préférence inférieur à 40°. La génératrice extérieure **104** de la piste de contact extérieure **56** est telle qu'elle s'éloigne de l'axe de référence **100** à mesure qu'elle se rapproche du chemin de roulement extérieur **54**. En outre, à mesure qu'elle se rapproche du chemin de roulement extérieur **54**, elle s'éloigne de l'axe de référence **100** moins rapidement que la génératrice intérieure **102** de la piste de contact intérieure **26**. La piste de contact extérieure **56** présente plus généralement, dans tout plan de coupe comprenant l'axe de référence **100**, une génératrice formant, avec la génératrice de la piste de contact intérieure **26** un angle supérieur à 0,5°, de préférence supérieur à 1°, et inférieur à 30°, de préférence inférieur à 15°. Le chemin de roulement extérieur **54** et la piste de contact extérieure **56** sont séparés par une surface de séparation extérieure **58**.

Le roulement à billes **10** comprend en outre une cage de roulement **60**, configurée pour espacer et maintenir les corps roulants **16** dans des positions relatives déterminées, et la cage de guidage **40**, indépendante de la cage de roulement **60** et destinée à guider les billes de contact **35**. La cage de guidage **40**, qui appartient au dispositif de passage de courant **70**, comprend un anneau **62** présentant une face de guidage destinée à être en regard de la surface d'accueil . L'anneau **62** comprend en outre des alvéoles **66** et au moins un dispositif de débrayage **68**. La cage de guidage **40** comprend ici trois alvéoles **66** décalées angulairement les unes des autres d'un angle 2π/3 de sorte que le dispositif de passage de courant **70** soit équilibré statiquement. Les alvéoles **66** sont saillantes axialement et radialement de l'anneau **62**, de sorte à pénétrer sans contact entre les pistes de contact. Pour ce faire, dans le plan de coupe comprenant l'axe de référence **100** et le centre d'une bille de contact **35** (illustré sur la figure 1), une alvéole **66** forme, avec l'axe de référence **100**, un angle moyen supérieur à 12°, de préférence supérieur à 14°, et inférieur à 47°, de préférence inférieur à 42°. Les alvéoles **66** sont définies par des éléments d'alvéole **64** rigides. Les alvéoles **66** sont équidistantes les unes des autres et présentent une forme ovoïdale, c'est-à-dire que le trou traversant de l'élément d'alvéole **64** destiné à accueillir la bille présente une dimension axiale supérieure à sa dimension orthoradiale. Ainsi, l'élément d'alvéole **64** présente une butée axiale **72** pour maintenir la bille de contact **35** entre les pistes de contact lorsqu'elle se déplace en direction de la deuxième face d'extrémité **22**, deux facettes de guidage **76** orthoradiales pour entrainer la bille de contact **35** orthoradialement et une liaison axiale **74**, opposée à la butée axiale **72**, et liant les deux facettes de guidage **76** orthoradiales entre elles de sorte à solidifier la structure de l'alvéole.

Les dispositifs de débrayage **68** sont aussi au nombre de trois et sont répartis à équidistance les uns des autres. Ils sont aussi répartis à équidistance des deux alvéoles **66** adjacentes associées. Une telle répartition assure l'équilibrage statique de la cage, et permet de minimiser les contraintes mécaniques, donc de maximiser la résistance de ladite cage. Les dispositifs de débrayage **68** sont configurés pour entraîner la cage de guidage **40** en rotation avec la bague intérieure **14** à faible vitesse, et l'en désolidariser lorsque la vitesse angulaire dépasse un seuil prédéterminé, dit seuil de vitesse angulaire de débrayage. Pour ce faire, les dispositifs de débrayage **68** comprennent chacun au moins une portion mobile **90** liée à une structure rigide **82**,

formée ici par une protrusion, des dispositifs de débrayage **68** par l'intermédiaire d'un bras flexible **84** apte à se déformer élastiquement en fonction de la force centrifuge induite par la vitesse de rotation du sous-ensemble tournant **4.** La portion mobile **90** comprend un patin mobile **78** configuré pour venir en position d'accouplement, en appui contre la bague intérieure **14,** et plus particulièrement la surface annulaire intérieure **18,** et de préférence sur une portion au moins de la piste de contact intérieure **26** lorsque le mécanisme est à l'arrêt, et plus généralement en-deçà du seuil de vitesse angulaire de débrayage. Chaque bras flexible **84,** conjugué à la portion mobile **90** qui comprend une répartition des masse configurée pour permettre une bascule, est configurée pour se déformer de sorte à éloigner la portion mobile **90** de l'axe de référence **100,** soulevant le patin mobile **78** associé de la bague intérieure **14** à mesure que la vitesse de rotation du sous-ensemble tournant **4** augmente jusqu'à ce qu'il atteigne une position désaccouplée dans laquelle il n'est plus en contact dudit sous-ensemble tournant **4** dès que la vitesse de rotation dépasse le seuil de vitesse angulaire de débrayage.

L'anneau **62** comprend également des butées radiales **86,** chaque butée radiale **86** étant disposée en regard de la portion mobile 90 associée, radialement plus éloignée de l'axe de référence **100,** de sorte à limiter le déplacement radial centrifuge de la portion mobile **90.**

L'anneau **62** comprend en outre une face annulaire intérieure **79** cylindrique tournée vers l'axe de référence **100.** Elle est destinée à se positionner en regard de la face d'accueil **42** de la bague intérieure **14.** La face annulaire intérieure **79** comprend au moins une languette de retenue **80** saillante radialement vers l'axe de référence **100** et destinée à pénétrer la gorge annulaire **44** de la portion d'accueil **38.** La languette de retenue **80** est configurée pour sécuriser le positionnement axial de la cage de guidage **40** dans le roulement à billes **10,** et est logée sans contact dans la gorge annulaire **44** de la portion d'accueil **38.** Les languettes de retenue **80** sont de préférence flexible, de sorte à être insérée dans la gorge annulaire **44** par déformation élastique.

Le dispositif de passage de courant **70** comprend, pour rappel, les pistes de contact intérieure et extérieure ainsi que la cage de guidage **40** et les billes de contact **35.** Le sous-ensemble fixe **2** est radialement plus éloigné du sous-ensemble tournant **4** au niveau de la première extrémité intérieure **32** qu'au niveau de la deuxième extrémité intérieure **34.** Dans le plan de coupe contenant l'axe de référence **100,** tout segment S perpendiculaire à l'axe de référence **100,** et ayant une première extrémité qui appartient à la piste de contact intérieure **26** et une deuxième extrémité qui appartient à la piste de contact extérieure **56,** présente :

- un centre C qui, dans un repère orthonormé direct ayant un axe d'abscisse x confondu avec l'axe de référence **100** et un axe des ordonnées y qui passe par la première extrémité intérieure **32** de la piste de contact intérieure **26,** a une abscisse égale à x et une ordonnée égale à y, définissant une fonction x→y=f(x) qui, lorsque x varie entre 0 et la deuxième extrémité intérieure **34** de la piste de contact intérieure **26,** est strictement croissante de manière continue ;

- une longueur $l$ définissant une fonction x→$l$=g(x) qui, lorsque l'abscisse x du centre **C** du segment **S** varie entre 0 et la deuxième extrémité intérieure **34,** est strictement décroissante de manière continue, présentant une valeur maximale strictement supérieure au diamètre des billes $D_{BC}$, et une valeur minimale inférieure ou égale au diamètre des billes $D_{BC}$.

Lorsque le roulement est à l'arrêt, les billes de contact **35** se positionnent axialement entre les deux pistes de contact en fonction de la gravité. Par exemple, si l'axe de référence est horizontal, une bille de contact **35** positionnée plus bas que l'axe de référence aura roulé par gravité sur la piste de contact extérieure pour se positionner au plus près des chemins de roulement **24** et **54.** À l'inverse, une bille de contact **35** positionnée plus haut que l'axe de référence **100** se trouvera entraînée par gravité sur la piste de contact intérieure pour se positionner le plus loin des chemins de roulement **24** et **54.** La bille de contact est alors maintenue entre les deux pistes de contact par la butée axiale **72.**

En fonctionnement, lorsque le roulement à billes **10** est en mouvement, le sous-ensemble tournant **4** entraîne avec lui en rotation la cage de guidage **40** par l'intermédiaire des patins mobiles **78.** La cage de guidage **40** entraîne alors en rotation les billes de contact **35** par l'intermédiaire d'une des deux surfaces orthoradiales **76** de chaque alvéoles **66,** billes qui, sous l'effet de la force centrifuge, s'éloigneront de l'axe de rotation qui est confondu avec l'axe de référence **100.** Les billes de contact **35** roulent alors sur la piste de contact extérieure, quelle que soit leur position initiale. Les billes de contact roulent de sorte à s'éloigner le plus possible de l'axe de référence **100** sous l'influence de la force de centrifuge. Elles se déplacent alors radialement et axialement en direction du point de la piste de contact intérieure **26** le plus éloigné radialement de l'axe de référence **100,** ici la deuxième extrémité intérieure **34.** Ce déplacement s'effectue jusqu'à ce que chaque bille de contact **35** atteigne une position dans laquelle elle est en contact avec la piste de contact intérieure **26** et la piste de contact extérieure **56.** Chaque bille de contact **35** est alors dans une position extrême axialement, en contact uniquement avec les deux pistes de contact **26, 56.**

La bille de contact **35** roulant sur la piste de contact intérieure **26** présente une vitesse de rotation autour de l'axe de référence **100** inférieure à la vitesse de rotation du sous-ensemble tournant **4.** La bille de contact **35,** logée dans l'alvéole **66,** entraîne en rotation la cage de guidage **40** qui s'est désolidarisée de la bague intérieure **14** tournante plus rapide, les bras flexibles **84** se déformant élastiquement afin que les portions mobiles **90** basculent, soulevant les patins mobiles **78** de la bague intérieure **14** pour ne pas engendrer de frottements.

Une telle structure de dispositif de passage de courant **70,** comportant des pistes de contact tronconiques, présente, dans un plan de coupe comprenant l'axe de référence, un cercle osculateur de rayon infini, réduisant les ellipses de contact entre la bille de contact **35** et chacune des deux pistes de contact, permettant de fendre plus aisément le film de lubrifiant présent dans le mécanisme, et ainsi diminuer l'impédance du dispositif de passage du courant **70** électrique au niveau du point de contact, prolongeant la durée de vie des pistes de contact ainsi que des pistes de roulement par la réduction, et de préférence, la suppression d'arcs électriques.

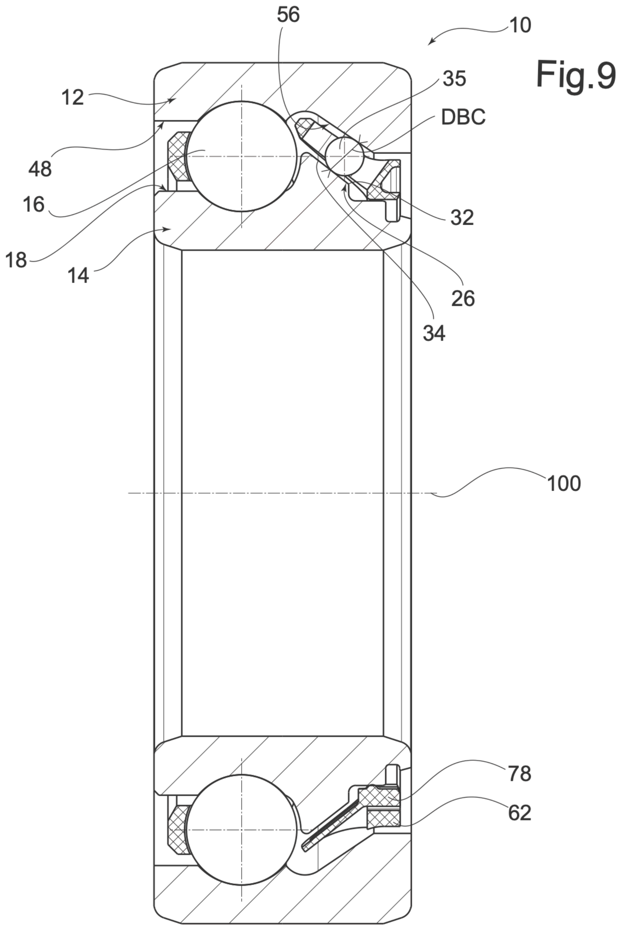

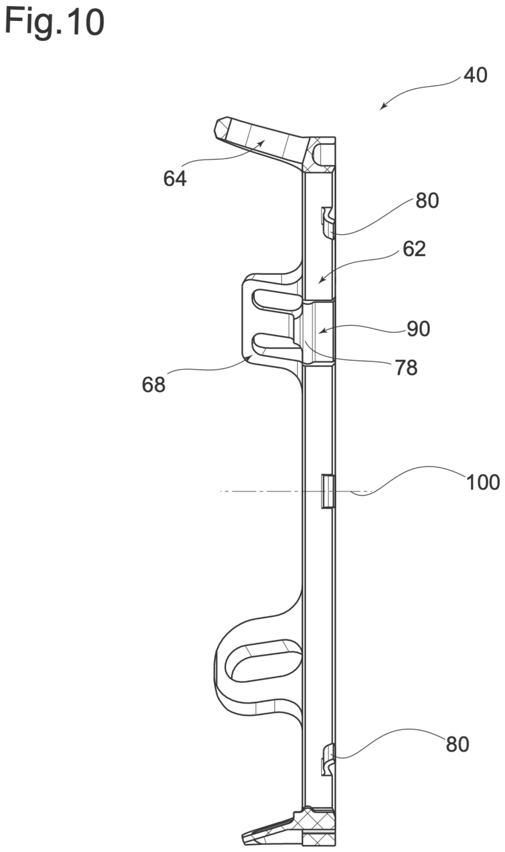

Selon un deuxième mode de réalisation illustré sur les figures 9 et 10, la piste de contact intérieure **26** présente une génératrice intérieure **102** formant, avec l'axe de référence **100,** un angle **A1** de 38° tandis que la piste de contact extérieure **56** présente une génératrice extérieure **104** formant, avec l'axe de référence **100,** un angle **A2** de 34°. Ce mode de réalisation est préféré dans les roulements nécessitant un encombrement axial plus réduit. Les alvéoles **66** et les dispositifs de débrayage **68** présentent alors un angle adapté de sorte à pénétrer entre les deux pistes de contact.

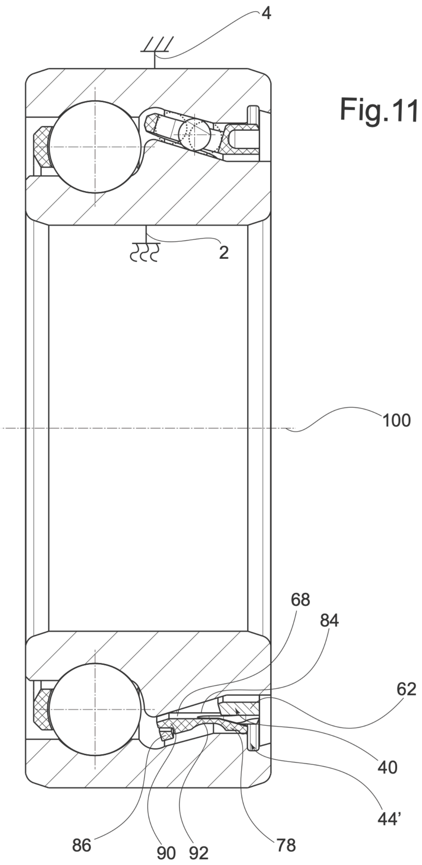

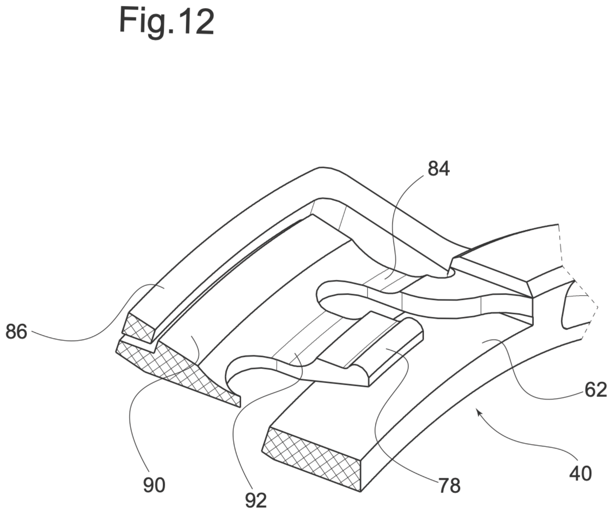

En outre, selon un troisième mode de réalisation alternatif illustré sur les figures 11 et 12, la bague extérieure **12** est liée à un sous-ensemble tournant **2,** la bague intérieure **14** pouvant être liée à un sous-ensemble fixe ou tournant. Dans cette hypothèse, on prévoit que la cage de guidage **40** n'est pas liée à la piste de contact intérieure **26** mais à la surface annulaire extérieure **48,** de préférence au moins partiellement à la piste de contact extérieure **56.** Pour ce faire, le bras flexible **84** lie l'anneau **62** à la portion mobile **90** qui lui est axialement saillante, la portion mobile **90** comprenant le patin mobile **78** saillant de cette dernière et situé dans une projection radiale de l'anneau **62.** La portion mobile **90** présente une masse supérieure à celle du patin mobile **78** qui lui est lié par un bras indéformable **92,** on entend ici dans les conditions d'utilisation de cette pièce. Le patin mobile **78** est situé radialement plus loin de l'axe de référence **100** que la portion mobile **90.** Dans ce mode de réalisation, la butée radiale **86** est aussi tournée radialement vers l'axe de référence **100,** cependant, elle est en regard de la portion mobile **90** pour limiter un déplacement radial de ladite portion mobile **90** vers l'extérieur. En fonctionnement, lorsque la vitesse de rotation de la cage de guidage **40** est suffisamment élevée, la portion mobile **90** s'éloigne de l'axe de référence **100,** éloignement rendu possible par la flexibilité du bras flexible **84** et mis en œuvre par la force centrifuge agissant sur la masse de ladite portion mobile **90.** Par effet de levier, lorsque la portion mobile **90** s'éloigne de l'axe de référence **100,** le patin mobile **78** est déplacé radialement en direction de l'axe de référence **100,** ce qui le décolle de la piste de contact extérieure **56.** En outre, dans ce mode de réalisation, les languettes de retenue **80** sont saillantes radialement de manière centrifuge et sont logées dans une gorge annulaire **44'** située sur la bague extérieure **12.**

Les exemples représentés sur les figures et discutés ci-dessus ne sont donnés qu'à titre illustratif. D'autres modes de réalisation peuvent être envisagés, notamment en combinant les caractéristiques des différents exemples de réalisation illustrés.

Par exemple, selon un mode de réalisation alternatif, l'anneau **62** peut être équipé d'un nombre N, différent de trois, d'alvéoles **66** décalées angulairement les unes des autres d'un angle $2\pi/N$. Indépendamment, l'anneau **62** peut être équipé d'un nombre N', différent de trois, de dispositifs de débrayage **68** décalés angulairement les uns des autres d'un angle $2\pi/N'$.

Selon un autre mode de réalisation alternatif, le dispositif de passage de courant 70 est formé par deux bagues distinctes des deux bagues formant les chemins de roulement du roulement. Selon une variante, le dispositif de passage de courant **70** est formé par deux bagues distinctes dont l'une forme également l'un des chemins de roulement, l'autre chemin de roulement étant formé sur une bague distincte des deux bagues du dispositif de passage de courant. Une variante également réalisable serait de former le dispositif de passage de courant avec une bague montée fixement à l'un des deux sous-ensembles **2,4** du dispositif tournant, permettant l'assemblage la fixation de la cage de guidage et l'apport de l'une des deux pistes de contact, l'autre piste de contact étant réalisée directement sur l'autre sous-ensemble **2,4,** qui constitue dans cette hypothèse l'autre bague.

Selon un autre mode de réalisation alternatif, le roulement présente des corps roulants **16** qui ne sont pas des billes, mais des rouleaux cylindriques ou coniques, ou en forme de tonnelets par exemple.

Selon un autre mode de réalisation alternatif, les pistes de contact intérieure **26** et extérieure **56** s'éloignent l'une de l'autre à mesure qu'elles se rapprochent des chemins de guidage. La cage de guidage **40** comprend alors des alvéoles ainsi qu'au moins un dispositif de débrayage centrifuge **68** adapté, inséré entre les deux pistes de contact par déformation.

Selon un autre mode de réalisation alternatif, le dispositif de passage de courant **70** est monté sur deux bagues formant un palier lisse.

**Revendications**

1. Dispositif de passage de courant (70) entre deux sous-ensembles (2, 4), au moins l'un des deux sous-ensembles étant apte à tourner autour d'un axe de révolution par rapport à l'autre des deux sous-ensembles, le dispositif comprenant :

- une piste de contact intérieure (26) annulaire et conductrice, destinée à être solidaire d'un premier des deux sous-ensembles (2, 4), la piste de contact intérieure (26) ayant une symétrie de révolution autour d'un axe de référence (100) du dispositif de passage de courant (70) destiné à être confondu avec l'axe de révolution, la piste de contact intérieure (26) étant tournée radialement vers l'extérieur et s'étendant axialement au moins d'une première extrémité intérieure (32) à une deuxième extrémité intérieure (34), plus éloignée de l'axe de référence que la première extrémité intérieure (32) ;
- une piste de contact extérieure (56) annulaire et conductrice, destinée à être solidaire d'un deuxième des deux sous-ensembles (2, 4), la piste de contact extérieure (56) ayant une symétrie de révolution autour de l'axe de référence (100), la piste de contact extérieure (56) étant tournée radialement vers l'intérieur et en regard de la piste de contact intérieure (26) ;
- au moins une bille de contact (35) conductrice, présentant un diamètre de bille $D_{BC}$, positionnée entre les pistes de contact intérieure et extérieure, et aptes, dans une position opérationnelle, à rouler sur les pistes de contact intérieure et extérieure ;

le dispositif de passage de courant (70) étant **caractérisé en ce que** dans un plan de coupe contenant l'axe de référence (100), tout segment perpendiculaire à l'axe de référence (100), et ayant une première extrémité qui appartient à la piste de contact intérieure (26) et une deuxième extrémité qui appartient à la piste de contact extérieure (56), présente :

- un centre (C) qui, dans un repère orthonormé ayant un axe d'abscisse confondu avec l'axe de référence (100) et un axe des ordonnées qui passe par la première extrémité intérieure (32) de la piste de contact intérieure (26), a une abscisse égale à x et une ordonnée égale à y, définissant une fonction $x \rightarrow y = f(x)$ qui, lorsque x varie entre 0 et une abscisse positive de la deuxième extrémité, est strictement croissante de manière continue ;
- une longueur $l$ définissant une fonction $x \rightarrow l = g(x)$ qui, lorsque l'abscisse x du centre (C) du segment (S) varie entre 0 et la deuxième extrémité, est strictement décroissante de manière continue, présentant une valeur maximale supérieure au diamètre de bille $D_{BC}$, et une valeur minimale inférieure au diamètre de bille $D_{BC}$, de sorte à permettre à la bille de contact, soumise à une force centrifuge, un débattement à la fois axial et radial d'une position sans contact simultané avec la piste de contact intérieure et la piste de contact extérieure à une position en contact simultané avec la piste de contact intérieure et la piste de contact extérieure.

2. Dispositif de passage de courant (70) selon la revendication 1, **caractérisé en ce que** la piste de contact intérieure (26) est tronconique.

3. Dispositif de passage de courant (70) selon la revendication 2, **caractérisé en ce que** la piste de contact intérieure (26) présente, dans tout plan de coupe comprenant l'axe de référence (100), une génératrice formant, avec l'axe de référence (100), un angle A1 supérieur à 2°, de préférence supérieur à 14°, et inférieur à 47°, de préférence inférieur à 42°.

4. Dispositif de passage de courant (70) selon l'une des revendications 1 à 3, **caractérisé en ce que** la piste de contact extérieure (56) est tronconique.

5. Dispositif de passage de courant (70) selon la revendication 4, **caractérisé en ce que** la piste de contact extérieure (56) présente, dans tout plan de coupe comprenant l'axe de référence (100), une génératrice formant, avec l'axe de référence (100), un angle A2 supérieur à 1.5°, de préférence supérieur à 12°, et inférieur à 45°, de préférence inférieure à 40°.

6. Dispositif de passage de courant (70) selon la revendication 4 en combinaison avec la revendication 2, **caractérisé en ce que** la piste de contact extérieure (56) présente, dans tout plan de coupe comprenant l'axe de référence (100), une génératrice formant, avec une génératrice de la piste de contact intérieure (26) un angle supérieur à 0,5°, de préférence supérieur à 1°, et inférieur à 30°, de préférence inférieure à 15°.

7. Dispositif de passage de courant (70) selon l'une quelconque des revendications précédentes, **caractérisé en ce qu'**il comprend une cage de guidage (40) positionnée au moins partiellement entre les pistes de contact intérieure et extérieure, la cage de guidage (40) présentant au moins une alvéole (66) dans laquelle est logée la bille de contact (35), l'alvéole (66) définissant une butée axiale (72) pour la bille de contact (35), la butée axiale (72) étant située entre les pistes de contact intérieure et extérieure et axialement plus proche de la première extrémité intérieure (32) de la piste de contact intérieure (26) que de la deuxième extrémité intérieure (34) de la piste de contact intérieure (26), la butée axiale (72) étant tournée axialement vers la deuxième extrémité intérieure (34) de la piste de contact intérieure (26), la bille de contact (35) établissant un point de contact avec la piste de contact intérieure (26)

à l'abscisse 0 lorsqu'elle est en appui contre la butée axiale (72), l'alvéole (66) comportant deux facettes de guidage (76) opposées se faisant face dans une direction orthoradiale, les deux facettes de guidage (76) s'étendant axialement depuis la butée axiale (72) en direction de la deuxième extrémité intérieure (34), de façon à permettre un déplacement de la bille de contact (35) telle que l'abscisse du point de contact entre la bille de contact (35) et la piste de contact intérieure (26) varie entre 0 et l'abscisse de la deuxième extrémité.

8. Dispositif de passage de courant (70) selon la revendication 7, **caractérisé en ce que**

    - les deux facettes de guidage (76) sont situées à une distance l'une de l'autre supérieure au diamètre des billes $D_{BC}$ ; et/ou
    - les deux facettes de guidage (76) sont planes ou concaves.

9. Dispositif de passage de courant (70) selon la revendication 7 ou 8, **caractérisé en ce que** la cage de guidage (40) comporte au moins un dispositif de débrayage centrifuge (68) apte à solidariser la cage de guidage (40) à une piste de contact tournante parmi la piste de contact intérieure (26) et la piste de contact extérieure (56), en deçà d'un seuil de vitesse angulaire de débrayage de la piste de contact intérieure (26) ou de la piste de contact extérieure (56) et à libérer la cage de guidage (40) au-delà du seuil de vitesse angulaire de débrayage, le dispositif de débrayage centrifuge comportant de préférence une portion mobile (90) reliée à un corps annulaire (62) de la cage de guidage (40) par au moins un bras flexible (84), ladite portion mobile (90) comprenant un patin mobile (78) destiné à venir en contact avec l'un quelconque des deux sous-ensembles (2, 4), le dispositif de débrayage centrifuge comportant de préférence une butée radiale (86) en regard de la portion mobile (90) pour limiter un déplacement radial de la portion mobile (90) lorsqu'elle s'éloigne de l'axe de référence (100).

10. Dispositif de passage de courant (70) selon l'une quelconque des revendications 7 à 9, **caractérisé en ce que**

    - la cage de guidage (40) comporte une ou plusieurs languettes de retenue (80) en saillie radiale et/ou
    - la cage de guidage (40) est réalisée d'une pièce en matière plastique.

11. Palier à roulement (10) comportant une bague intérieure (14) comprenant au moins un chemin de roulement intérieur (24), une bague extérieure (12) comprenant au moins un chemin de roulement extérieur (54), et des corps roulants (16), positionnés de façon à rouler simultanément sur les chemins de roulement intérieur et extérieur ; le palier à roulement étant **caractérisé en ce qu'**il comprend un dispositif de passage de courant (70) selon l'une quelconque des revendications précédentes, la bague intérieure (14) comprenant la piste de contact intérieure (26) annulaire et la bague extérieure (12) comprenant la piste de contact extérieure (56) annulaire, la bague intérieure (14) étant de préférence monobloc et/ou la bague extérieure (12) étant de préférence monobloc.

12. Palier à roulement (10) selon la revendication 11 **caractérisé en ce que**

    - le chemin de roulement intérieur (24) est situé axialement à distance de la piste de contact intérieure (26) et le chemin de roulement extérieur (54) est situé axialement à distance de la piste de contact extérieure (56) et/ou
    - la première extrémité intérieure (32) de la piste de contact intérieure (26) est axialement plus éloignée du chemin de roulement intérieur (24) que la deuxième extrémité intérieure (34) de la piste de contact intérieure (26).

13. Palier à roulement selon l'une quelconque des revendications 11 à 12, le dispositif de passage de courant étant selon l'une quelconque des revendication 7 à 10, **caractérisé en ce que**

    - la cage de guidage (40) présente une face de guidage et située en regard et à distance inférieure à 0,5 mm et supérieure à 0,05 mm d'une face correspondante d'un des deux sous-ensembles (2,4) ; et/ou
    - les corps roulants (16) sont positionnés dans des alvéoles (64') d'une cage de roulement (60) non solidaire de la cage de guidage (40).

14. Ensemble **caractérisé en ce qu'**il comprend deux sous-ensembles et un palier à roulement selon l'une quelconque des revendications 11 à 13 pour guider au moins l'un des deux sous-ensembles en rotation autour d'un axe de révolution par rapport à l'autre des deux sous-ensembles, le premier sous-ensemble étant apte à tourner par rapport au deuxième sous-ensemble autour de l'axe de révolution, le deuxième sous-ensemble étant fixe en rotation dans un repère géostationnaire.

Fig.1

# Fig.2

# Fig.3

Fig.4

# Fig.5

Fig.6

Fig.7

## Fig.8

Fig.9

Fig.10

Fig.11

Fig.12

Europäisches
Patentamt

European
Patent Office

Office européen
des brevets

## RAPPORT DE RECHERCHE EUROPEENNE

Numéro de la demande

EP 25 20 8417

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 199 45 492 A1 (SCHLEIFRING UND APP BAU GMBH [DE]) 5 avril 2001 (2001-04-05) * colonne 1, lignes 3-5; revendications 25, 26; figure 9 * ----- | 1,2 | INV. H02K7/08 H01R39/64 F16C41/00 F16C19/06 |
| Y | US 2016/208852 A1 (SCHAEFFLER TECHNOLOGIES AG [DE]) 21 juillet 2016 (2016-07-21) | 1-8, 10-14 | |
| A | * figure 2 * ----- | 9 | |
| Y | FR 2 375 483 A1 (MASCHF AUGSBURG NUERNBERG AG [DE]) 21 juillet 1978 (1978-07-21) | 1-8, 10-14 | |
| A | * revendication 1; figure 1 * ----- | 9 | |
| A | US 5 553 949 A (FUKUWAKA MASAO [JP] ET AL) 10 septembre 1996 (1996-09-10) * colonne 6 lignes 27-36; figures 1b, 3b * ----- | 13 | |
| A | JP 2015 169300 A (JTEKT CORP) 28 septembre 2015 (2015-09-28) * alinéa [0024]; figure 3 * ----- | 13 | |

DOMAINES TECHNIQUES RECHERCHES (IPC)

F16C
H02K
H01R

Le présent rapport a été établi pour toutes les revendications

| Lieu de la recherche | Date d'achèvement de la recherche | Examinateur |
|---|---|---|
| La Haye | 25 novembre 2025 | Verveckken, Jan |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 20 8417

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-11-2025

| Document brevet cité au rapport de recherche | | | Date de publication | Membre(s) de la famille de brevet(s) | | Date de publication |
|---|---|---|---|---|---|---|
| DE 19945492 | A1 | | 05-04-2001 | AUCUN | | |
| US 2016208852 | A1 | | 21-07-2016 | CN | 105518322 A | 20-04-2016 |
| | | | | DE | 102013218620 A1 | 19-03-2015 |
| | | | | EP | 3047166 A1 | 27-07-2016 |
| | | | | US | 2016208852 A1 | 21-07-2016 |
| | | | | WO | 2015039656 A1 | 26-03-2015 |
| FR 2375483 | A1 | | 21-07-1978 | DE | 2658925 A1 | 29-06-1978 |
| | | | | FR | 2375483 A1 | 21-07-1978 |
| | | | | GB | 1540690 A | 14-02-1979 |
| | | | | NL | 7713835 A | 27-06-1978 |
| US 5553949 | A | | 10-09-1996 | DE | 19517150 A1 | 16-11-1995 |
| | | | | JP | H07305728 A | 21-11-1995 |
| | | | | US | 5553949 A | 10-09-1996 |
| JP 2015169300 | A | | 28-09-2015 | CN | 104912919 A | 16-09-2015 |
| | | | | DE | 102015103411 A1 | 10-09-2015 |
| | | | | JP | 6442837 B2 | 26-12-2018 |
| | | | | JP | 2015169300 A | 28-09-2015 |
| | | | | US | 2015252848 A1 | 10-09-2015 |

EPO FORM P0460

Pour tout renseignement concernant cette annexe : voir Journal Officiel de l'Office européen des brevets, No.12/82

## EP 4 734 337 A1

**Documents brevets cités dans la description**

- JP 2022118903 B